# EUROPÄISCHE PATENTSCHRIFT

(11) **EP 1 695 133 B1**
(45) Veröffentlichungstag und Bekanntmachung des Hinweises auf die Patenterteilung: **27.04.2016**
(21) Anmeldenummer: 04762754.2
(22) Anmeldetag: 03.09.2004
(51) Int. Cl.: G02B 21/00

(54) **VORRICHTUNG ZUR ERZEUGUNG EINES MEHRERE WELLENLÄNGEN UMFASSENDEN LICHTSTRAHLS**
DEVICE FOR THE PRODUCTION OF A LIGHT BEAM HAVING SEVERAL WAVELENGTHS
DISPOSITIF DE PRODUCTION D'UN FAISCEAU LUMINEUX COMPORTANT PLUSIEURS LONGUEURS D'ONDES

(30) Priorität: 15.12.2003 DE 10359015; 22.12.2003 DE 10361176
(43) Veröffentlichungstag der Anmeldung: 30.08.2006
(73) Patentinhaber: Leica Microsystems CMS GmbH, 35578 Wetzlar (DE)
(72) Erfinder: SEYFRIED, Volker, 69226 Nussloch (DE); STORZ, Rafael, 69115 Heidelberg (DE)
(74) Vertreter: Patent- und Rechtsanwälte Ullrich & Naumann
(86) Internationale Anmeldenummer: PCT/DE2004/001969
(87) Internationale Veröffentlichungsnummer: WO 2005/059595

(56) Entgegenhaltungen:
- EP-A- 1 170 607
- DE-A1- 19 633 185
- GB-A- 2 153 546
- US-A- 6 067 178

## Beschreibung

Die Erfindung betrifft Mikroskop zur Vereinigung von Laserlichtstrahlen unterschiedlicher Wellenlängen zu einem mehrere Wellenlängen umfassenden Beleuchtungslichtstrahl, umfassend eine einzelne Strahlvereiniger umfassende Strahlvereinigeranordnung zur Vereinigung von durch jeweilige Laserlichtquellen erzeugten Laserlichtstrahlen unterschiedlicher Wellenlängen, wobei die Strahlvereiniger jeweils eine individuelle charakteristische Wellenlänge derart besitzen, dass sie Laserlichtstrahlen mit Wellenlängen, die kürzer sind als die charakteristische Wellenlänge, im Wesentlichen transmittieren und Laserlichtstrahlen mit längeren Wellenlängen im Wesentlichen reflektieren oder umgekehrt.

Vorrichtungen der gattungsbildenden Art sind aus der Praxis bekannt und werden beispielsweise in der DE 196 33 185 C2 beschrieben. Aus dieser Druckschrift ist eine mehrfarbige Punktlichtquelle für ein Laserscanmikroskop bekannt, bei der Laserlichtstrahlen unterschiedlicher Wellenlängen mittels einer Strahlvereinigeranordnung koaxial zusammengeführt werden. Die dort gezeigte Strahlvereinigeranordnung umfasst drei Strahlvereiniger und ist als monolithische Einheit ausgebildet. Nach der Strahlvereinigung werden die vereinten Laserlichtstrahlen über eine Lichtleitfaser zu einem Mikroskop geführt und dort eingekoppelt.

Die bekannten Vorrichtungen der gattungsbildenden Art sind insbesondere im Hinblick auf ihre unzureichende Flexibilität problematisch. In den meisten Fällen sind die Laserlichtquellen mit der Strahlvereinigeranordnung fest verbunden, so dass die Einkopplung zusätzlicher Laserlichtquellen oder einer anderen Kombination von Laserlichtquellen nahezu unmöglich ist. Werden die Laserlichtstrahlen über Lichtleitfasern in die Strahlvereinigeranordnung eingekoppelt, so sind die Möglichkeiten der Einkopplung der Laserlichtquellen durch die konkrete Anordnung und Ausgestaltung der Strahlvereiniger der Strahlvereinigeranordnung begrenzt. Außerdem müssen üblicherweise alle in die Strahlvereinigeranordnung eingekoppelten Laserlichtstrahlen justiert werden, wodurch ein einfaches Austauschen der Laserlichtquellen verhindert ist. Mit dem Austausch einzelner Laserlichtquellen wird im Allgemeinen zugleich auch die Auswechslung und Neujustierung der einzelnen Strahlvereiniger notwendig, damit eine Vereinigung der unterschiedlichen Laserlichtstrahlen möglich wird. Die aus dem Stand der Technik bekannten Vorrichtungen zur Erzeugung eines mehrere Wellenlängen umfassenden Lichtstrahls sind insoweit äußerst bedienerunfreundlich, und eine besondere Serviceleistung des Geräteherstellers wird somit in den meisten Fällen zwingend erforderlich sein.

Aus der GB 2 153 546 A ist für sich gesehen ein optischer Demultiplexer/Multiplexer bekannt, der aus einer Reihe von Reflexionsfiltern 1-6 besteht, die als holographische Schichten zwischen Abstandsstücken angeordnet sind.

Aus der EP 1 170 607 A1 ist für sich gesehen ebenfalls ein optischer Demultiplexer/Multiplexer bekannt. Die Vorrichtung umfasst ein Gehäuse mit mehreren Lichteintritts- bzw. Lichtaustrittsanschlüssen sowie eine in dem Gehäuse eingeschlossene Filtereinheit, welche beim Einsatz der Vorrichtung als Multiplexer im Sinne einer Strahlvereinigeranordnung arbeitet. Die Filtereinheit ist als blockartiger Formkörper ausgeführt, in dessen Innerem Z-förmig angeordnete Kanäle als Lichtdurchgänge ausgebildet sind. An den Austritten der Kanäle aus dem Formkörper sind selektiv Transmissions-/Reflexionsfilter zur Strahlvereinigung bzw. zur Strahlauffächerung montiert.

Aus der US 6,067,178 ist für sich gesehen ebenfalls ein optischer Demultiplexer bekannt, der dazu dient, eine Vielzahl von Wellenlängen, die in einem Lichtstrahl gebündelt sind, voneinander zu separieren. Zur Reduzierung von Intensitätsverlusten, die auftreten, wenn die wellenlängensensitiven Filter zur Separierung einzelner Wellenlängen linear hintereinander angeordnet sind, sind die Filter in Reihe sowie gruppenweise parallel zueinander angeordnet.

Der Erfindung liegt nun die Aufgabe zugrunde, ein Mikroskop der eingangs genannten Art derart auszugestalten und weiterzubilden, dass die spektrale Zusammensetzung des zu erzeugenden Beleucrltungslichtstrahls nahezu beliebig auswählbar ist und von einem Benutzer ohne Austauschteile und Neujustierung in einfacher Weise verändert werden kann.

Das erfindungsgemäße Mikroskop der gattungsbildenden Art löst die voranstehende Aufgabe durch die Merkmale des Patentanspruchs 1. Danach ist eine solches Mikroskop dadurch gekennzeichnet, dass die Strahlvereiniger jeweils zum Einkoppeln eines Laserlichtstrahls mit einer Wellenlänge eines definierten Wellenlängenbereichs ausgelegt sind, indem die Strahlvereiniger derart in Reihe sowie gruppenweise parallel zueinander im Sinne einer baumartigen Struktur angeordnet sind, dass die charakteristischen Wellenlängen von benachbarten Strahlvereinigern in den Parallelzweigen jeweils weniger als 40 nm auseinander liegen, wobei die Strahlvereiniger derart bereitgestellt sind, dass durch die Gesamtheit der gleichzeitig einkoppelbaren Laserlichtstrahlen im Wesentlichen das sichtbare Wellenlängenspektrum von 430 nm bis 700 nm mit einer Separation von jeweils zwei benachbarten Wellenlängen von maximal 40 nm abdeckbar ist.

In erfindungsgemäßer Weise ist zunächst erkannt worden, dass der Trend zunehmend in Richtung modularer Geräteeinheiten geht, die benutzerseitig in einfacher Weise und ohne großen Wartungsaufwand einsetzbar sind. In diesem Zusammenhang ist weiter erkannt worden, dass dabei eine hohe Flexibilität und Anpassbarkeit an spezielle Benutzerwünsche und Anforderungen von ganz besonderer Bedeutung ist. Schließlich ist erkannt worden, dass eine derartige Flexibilität dann realisiert ist, wenn die Strahlvereiniger erfindungsgemäß in Reihe sowie gruppenweise parallel zueinander im Sinne einer baumartigen Struktur angeordnet sind und jeweils zum Einkoppeln eines Laserlichtstrahls mit einer Wellenlänge eines definierten Wellenlängenbereichs ausgelegt sind. Dazu sind die Strahlvereiniger so angeordnet, dass die charakteristischen Wellenlängen von benachbarten Strahlvereinigern in den Parallelzweigen jeweils weniger als 40 nm auseinander liegen. Des Weiteren ist erfindungsgemäß vorgesehen, dass die Gesamtheit der einkoppelbaren Laserlichtstrahlen im Wesentlichen das komplette sichtbare Wellenlängenspektrum abdeckt. Ein Benutzer eines erfindungsgemäßen Mikroskops wird somit bspw. in die Lage versetzt, sich die notwendigen Wellenlängen seines Beleuchtungslichtstrahls individuell zusammenzustellen und die Zusammenstellung zu verändern, ohne dass hierzu Umbauten oder Justierarbeiten erforderlich wären. Insoweit ist eine in hohem Maße bedienerfreundliches Mikroskop mit einer Vorrichtung zur Erzeugung eines mehrere Wellenlängen umfassenden Beleuchtungslichtstrahls im Sinne einer "Plug and Play"-Lösung realisiert.

Zur Anpassung an spezifische Anforderungen aus der Praxis weist der für jeden der Strahlvereiniger individuell definierte Wellenlängenbereich erfindungsgemäß eine vorgebbare spektrale Breite von weniger als 40 nm auf, d.h. mit anderen Worten liegen die charakteristischen Wellenlängen von benachbarten Strahlvereinigern in den Parallelzweigen jeweils weniger als 40 nm auseinander. Dabei ist berücksichtigt, dass beispielsweise in der Fluoreszenzmikroskopie für die meisten Fluoreszenzfarbstoffe die spektrale Breite des möglichen Anregungswellenlängenbereichs in der Größenordnung von 40 nm FWHM (Full Width at Half Maximum) liegt. Um sicherzugehen, dass alle in einer bestimmten Probe enthaltenen Fluoreszenzfarbstoffe angeregt werden können, wird folglich ein Anregungslichtstrahl benötigt, der Wellenlängen umfasst, die maximal 40 nm voneinander separiert sind.

Bei der baumartigen Geometrie der Strahlvereiniger werden in parallelen Zweigen, in denen die Strahlvereiniger entsprechend ihrer jeweiligen charakteristischen Wellenlänge - d.h. von kurz nach lang oder umgekehrt-sortiert sind, zunächst mehrere Laserlichtstrahlen miteinander vereinigt und anschließend die aus den parallelen Zweigen resultierenden Lichtstrahlen miteinander entlang eines Hauptstrahlenganges zu dem endgültigen Lichtstrahl vereinigt. Der Vorteil der baumartigen Struktur besteht darin, dass für die einzelnen Laserlichtstrahlen die Anzahl von Durchgängen durch die Strahlvereiniger im Vergleich zur Anordnung in Reihe geringer ist.

In einer konkreten Ausführungsform könnten die Strahlvereiniger als Bandkantenfilter, als dichroitische Filter oder als Etalons ausgeführt sein. Eine besonders effektive Strahlvereinigung ergibt sich beim Einsatz von Bandkantenfiltern mit steilen Flanken. Derartige Filter weisen im Allgemeinen auf der einen Seite eine spezielle Beschichtung aus mehreren Schichtpaketen auf, die dafür sorgt, dass der Filter die gewünschte spektrale Charakteristik besitzt. Auf der anderen Seite könnte eine Antireflexbeschichtung vorgesehen sein. Prinzipiell ist als Strahlvereiniger auch der Einsatz von polarisationsempfindlichen Elementen oder Neutralteilern oder dispersiven Elementen in Form von Prismen oder Gittern möglich.

Berücksichtigt man, dass die Breite des Anregungsmaximums der Farbstoffe typischerweise um die 20 nm beträgt, so benötigt man für eine optimale Anregung der Fluoreszenzfarbstoffe in der Probe einen Anregungslichtstrahl mit Wellenlängen, die sich maximal um 20 nm voneinander unterscheiden. Der für jeden der Strahlvereiniger individuell definierte Wellenlängenbereich könnte daher in vorteilhafter Weise eine spektrale Breite von weniger als 20 nm aufweisen, d.h. mit anderen Worten liegen die charakteristischen Wellenlängen von benachbarten Strahlvereinigern in den Parallelzweigen jeweils weniger als 20 nm auseinander. Näher aneinander liegende Wellenlängen machen für gewöhnlich keinen Sinn mehr, da mit einem Raster von jeweils um 20 nm voneinander separierten Anregungswellenlängen praktisch jeder Fluoreszenzfarbstoff optimal angeregt werden kann.

Im Hinblick auf eine hohe Übersichtlichkeit ist es besonders vorteilhaft, wenn die charakteristischen Wellenlängen von benachbarten Strahlvereinigern in den Parallelzweigen jeweils äquidistant zueinander auseinander liegen. Dabei könnten die für jeden der Strahlvereiniger individuell definierten Wellenlängenbereiche einander teilweise überlappen oder vollständig voneinander separiert sein.

Im Hinblick auf eine einfache Bedienbarkeit könnte vorgesehen sein, dass die Strahlvereinigeranordnung in einem Gehäuse eingeschlossen ist, so dass der interne Aufbau der Strahlvereinigeranordnung für einen Benutzer überhaupt nicht wahrnehmbar ist.

Der interne Aufbau der Strahlvereinigeranordnung könnte derart ausgeführt sein, dass vor den einzelnen Strahlvereinigern Kollimierlinsen zur Parallelisierung der Laserlichtstrahlen angeordnet sind. Die Laserlichtstrahlen könnten über Lichtleitfasern, insbesondere Glasfasern, auf die Kollimierlinsen gelenkt werden. Zur Vermeidung einer Dejustierung könnten die Strahlvereiniger und die Kollimierlinsen unmittelbar oder mittelbar fest mit dem Gehäuse verbunden sein.

In einer ganz besonders bedienerfreundlichen Ausführungsform sind die Laserlichtquellen, vorzugsweise in miniaturisierter Form, innerhalb des Gehäuses angeordnet und den Strahlvereinigern zugeordnet. Darüber hinaus könnte vorgesehen sein, dass die Laserlichtquellen von außerhalb des Gehäuses unabhängig voneinander aktivierbar und deaktivierbar sind. Ein Benutzer könnte sich folglich in einfacher Weise einen Lichtstrahl zusammenstellen, indem er einfach die entsprechenden Laserlichtquellen aktiviert, die dann aufgrund des erfindungsgemäßen Aufbausohne dass weitere Maßnahmen seitens des Benutzers erforderlich wären - miteinander vereint werden.

In einer alternativen Ausgestaltung könnten die Laserlichtquellen außerhalb des Gehäuses angeordnet sein, wobei die einzelnen Laserlichtstrahlen über Faserstecker als optische Schnittstellen in die Lichtleitfaser einkoppelbar sein könnten. Die Faserstecker könnten entweder in das Gehäuse des Strahlvereinigers eingelassen sein oder außerhalb des Gehäuses bereitgestellt sein. In letztgenannten Fall werden die Laserlichtstrahlen über in dem Gehäuse ausgebildete Faserdurchführungen nach außen geleitet.

Zur Vermeidung von Fehlbedienungen könnten die Faserstecker und/oder die Faserdurchführungen am Gehäuse eine charakteristische Beschriftung und/oder Kennung aufweisen, die anzeigt, welcher konkrete Wellenlängenbereich in den jeweiligen Faserstecker eingekoppelt werden kann.

Die Übergabe des Lichts an der durch einen Faserstecker gebildeten optischen Schnittstelle kann entweder durch direkten Kontakt zweier Fasern erfolgen, die ggf. auch einen kleinen Abstand zueinander aufweisen könnten, oder aber in kollimierter Form, indem beidseitig der Faserenden Kollimierlinsen angebracht sind. Diese können besonders vorteilhaft im Faserstecker selbst untergebracht sein. Genauso ist es natürlich denkbar, dass sich nur auf einer Seite der optischen Schnittstelle eine Glasfaser befindet und das Licht auf der anderen Seite über eine Freistrahloptik geführt wird.

Im Fall des direkten Kontakts zweier Glasfasern ist darauf zu achten, dass die Glasfasern einen großen Querschnitt aufweisen, um die Justierung zu erleichtern und Lichtverluste zu vermeiden. Da üblicherweise im sichtbaren Spektralbereich eingesetzte Single-Mode-Glasfasern optische Querschnitte von weniger als 5 µm haben, was die Justage schwierig bis unmöglich macht, bietet sich der Einsatz spezieller mikrostrukturierter Glasfasern an. Diese könnten aus sog. photonischem Bandlücken-Material (Photonic Bandgap) bestehen und folglich die Eigenschaften photonischer Kristalle aufweisen. Derartige Fasern können deutlich größere optische Querschnitte von über 10 µm aufweisen, obwohl ihre optischen Eigenschaften dennoch denen von Single-Mode-Glasfasern entsprechen.

Alternativ könnten auch Fasern mit einer sich verjüngenden Struktur (Tapered Fibres) eingesetzt werden. Bei solchen Fasern ändert sich der Querschnitt entlang der Faser, wobei im konkreten Fall die Faser so hergestellt sein könnte, dass der Querschnitt am Faserende größer ist als im Inneren der Faser.

Zum Auskoppeln des Lichtstrahls weist die Strahlvereinigeranordnung einen Ausgang auf, der als Faserstecker oder durch ein Austrittsfenster bzw. eine Austrittsöffnung für eine Freistrahloptik gebildet ist. Im Falle eines Faserausgangs bietet sich besonders vorteilhaft eine polarisationserhaltende, breitbandige Single-Mode-Faser an, die den Lichtstrahl beispielsweise zu einem Fluoreszenzmikroskop transportiert. Im Falle eines Konfokalmikroskops ist es von besonderem Vorteil, wenn die Strahlvereinigeranordnung fest am Konfokalmikroskop angeordnet ist und der Lichtstrahl der Strahlvereinigeranordnung vom Ausgang der Anordnung direkt über eine Linse auf die Anregungslochblende des Konfokalmikroskops fokussiert wird.

Zur benutzerspezifischen Konfiguration des ausgehenden Lichtstrahls könnte in vorteilhafter Weise ein Element zur spektralsensitiven Intensitätseinstellung am Ausgang der Strahlvereinigeranordnung bereitgestellt sein. Im Hinblick auf einen kompakten Aufbau ist das Element innerhalb des Gehäuses der Strahlvereinigeranordnung integriert und vor dessen Ausgang positioniert. Im Konkreten kann es sich bei dem Element zur spektralsensitiven Intensitätseinstellung um einen akustooptischen Filter (AOTF), einen akustooptischen Modulator (AOM), einen elektrooptischen Modulator (EOM), einen einstellbaren Flüssigkristallfilter (LCTF), ein Grating Valve Device (GVD) oder einen MEMS (Micro-Electro-Mechanical-System)-basierten Filter handeln. Für die Strahlvereinigeranordnung wird ggf. eine geeignete elektrische Schnittstelle benötigt, die durch einen passenden Steckverbinder realisiert sein könnte.

Für spezielle Anwendungen können der Strahlvereinigeranordnung Laserlichtstrahlen unterschiedlicher Wellenlängen durch Mehrlinienlaserlichtquellen bereitgestellt werden, wie z.B. durch Argonlaser, Kryptonlaser, Argon-Krypton-Laser, Mischgaslaser, Mehrfach-Faserlaser, Kontinuumslaser oder ähnliche. Da die einzelnen Strahlvereiniger der Strahlvereinigeranordnung im Gegensatz zu herkömmlichen Strahlvereinigern auf schmale Spektralbereiche begrenzt sind, wird bei der Verwendung solcher Laser eine geeignete Strahlteilungseinheit benötigt. Eine derartige Strahlteilungseinheit stellt in gewisser Weise ein inverses System zur Strahlvereinigeranordnung dar und separiert die unterschiedlichen Wellenlängen des Laserlichtstrahls der Mehrlinienlaserlichtquelle voneinander. Die so separierten Wellenlängen können den Strahlvereinigern einer Strahlvereinigeranordnung wie oben beschrieben zugeleitet werden. Die Strahlteilungseinheit kann dabei der Strahlvereinigeranordnung vorgeschaltet, an ihr befestigt oder sogar in sie integriert sein. Im Fall des Einsatzes von Mehrlinienlaserlichtquellen wird der Laserlichtstrahl somit zuerst über eine Strahlteilungseinheit aufgespalten und sodann den einzelnen Strahlvereinigern der bspw. nachgeschalteten Strahlvereinigeranordnung zugeführt, oder aber es wird ein Mehrfachkerbfilter als zusätzlicher Strahlvereiniger in die Strahlvereinigeranordnung eingebracht, der dazu dient, die jeweiligen Mehrlinienlaser möglichst verlustfrei mit dem Gesamtlichtstrahl zu vereinigen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines ersten Ausführungsbeispiels einer erfindungsgemäßen Vorrichtung,
- Fig. 2: eine schematische Darstellung eines zweiten Ausführungsbeispiels einer erfindungsgemäßen Vorrichtung,
- Fig. 3: eine schematische Darstellung einer Strahlvereinigeranordnung mit in Reihe angeordneten Strahlvereinigern,
- Fig. 4: eine schematische Darstellung einer Strahlvereinigeranordnung mit parallel angeordneten Strahlvereinigern,
- Fig. 5: in einem Diagramm das Transmissions- und Reflexionsverhalten eines Bandkantenfilters in Abhängigkeit der eingestrahlten Wellenlänge λ,
- Fig. 6: in einem Diagramm die Transmissions- und Reflexionscharakteristiken mehrerer Bandkantenfilter und
- Fig. 7: eine Strahlteilungseinheit zur Separierung unterschiedlicher Wellenlängen eines Laserlichtstrahls einer Mehrlinienlaserlichtquelle.

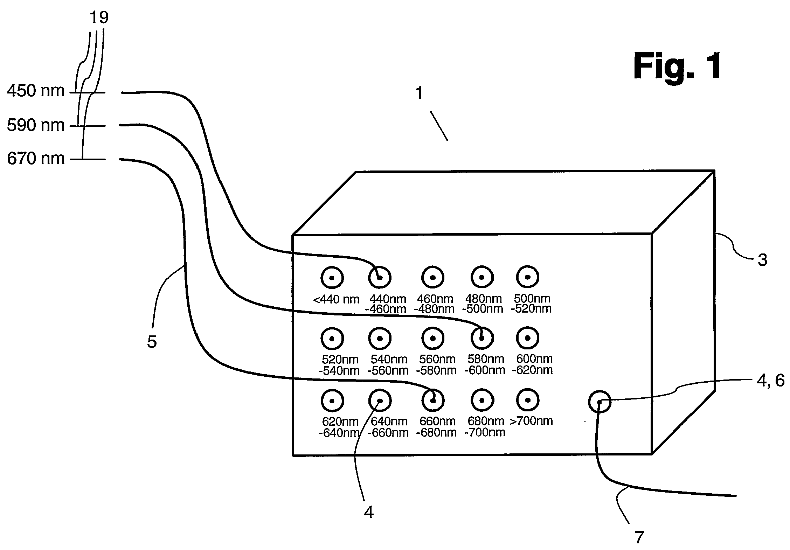

Fig. 1 zeigt schematisch ein erstes Ausführungsbeispiel einer erfindungsgemäßen Vorrichtung zur Erzeugung eines mehrere Wellenlängen umfassenden Lichtstrahls. Die Strahlvereinigeranordnung 1 mit den einzelnen Strahlvereinigern 2 ist in ein Gehäuse 3 integriert, welches sich einem Benutzer quasi als "Black-Box" darstellt. In die Vorderseite des Gehäuses 3 sind insgesamt fünfzehn Faser-Steckverbinder 4 integriert, in die die gewünschten Wellenlängen über Lichtleitfasern 5 eingekoppelt werden können. Jeder Faserstecker 4 korrespondiert mit einem innerhalb des Gehäuses 3 angeordneten Strahlvereiniger 2, die erfindungsgemäß jeweils zum Einkoppeln eines Laserlichtstrahls 19 mit einer Wellenlänge eines definierten Wellenlängenbereichs ausgelegt sind. An jedem der insgesamt fünfzehn Faserstecker 4 ist daher jeweils der für diesen definierte Wellenlängenbereich angegeben. So ist beispielsweise der erste Faserstecker 4 links oben zum Einkoppeln eines Laserlichtstrahls 19 mit einer Wellenlänge kleiner als 440 nm ausgelegt, der zweite Faserstrecker 4 der oberen Reihe für einen Laserlichtstrahl 19 mit einer Wellenlänge zwischen 440 nm und 460 nm, etc. Insgesamt ist somit das komplette sichtbare Spektrum von Wellenlängen kleiner als 440 nm bis größer als 700 nm abgedeckt. Die spektrale Breite beträgt für jeden Faserstrecker - ausgenommen der Randstecker - jeweils 20 nm. Die nicht benötigten Faserstrecker 4 sind nicht belegt und sind aus Gründen der Lasersicherheit, des Schutzes oder der Ästhetik mit strahlungsundurchlässigen Abdeckungen (nicht gezeigt) versehen.

Im dargestellten Beispiel werden insgesamt drei Laserlichtstrahlen 19 mit Wellenlängen von 450 nm, 590 nm und 670 nm eingekoppelt. Durch die interne Anordnung und Ausführung der einzelnen Strahlvereiniger 2 innerhalb des Gehäuses 3 ist gewährleistet, dass alle drei Laserlichtstrahlen 19 zu einem Lichtstrahl vereinigt werden. Dieser Lichtstrahl wird am Ausgang 6 der Strahlvereinigeranordnung 1 mittels einer breitbandigen Lichtleitfaser 7 abgegriffen und beispielsweise zu einem Mikroskop weitergeleitet. Dabei kann es sich insbesondere um konfokale Scanmikroskope, um semikonfokale Mikroskope, wie z.B. Zeilenscanner, Nipkowsysteme oder um eine Punktrasterbeleuchtung handeln. Auch die Weiterleitung an konfokale Endoskope ist von großer praktischer Bedeutung.

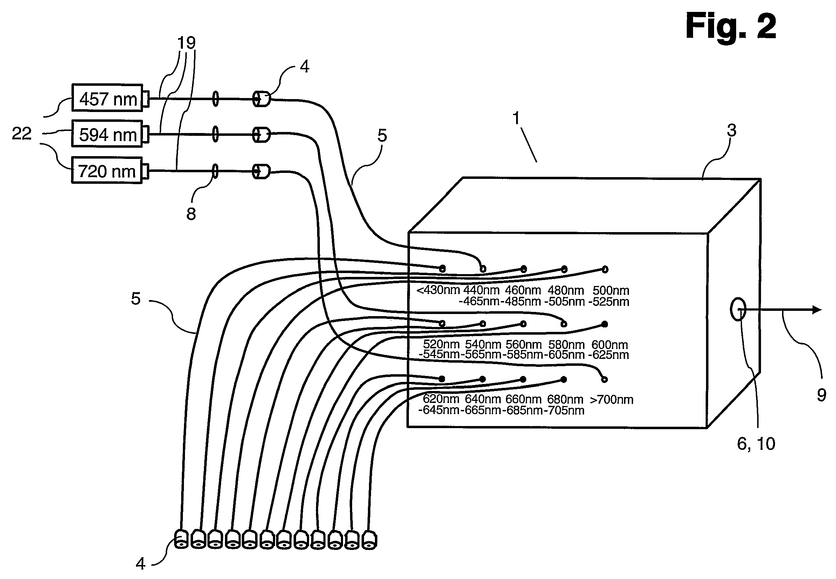

Fig. 2 zeigt in einer schematischen Darstellung ein zweites Ausführungsbeispiel einer erfindungsgemäßen Vorrichtung, das sich lediglich in der Ein- und Auskopplung der Laserlichtstrahlen 19 von dem in Fig. 1 dargestellten Beispiel unterscheidet. Zur Einkopplung der Laserlichtstrahlen 19 sind Faserstecker 4 außerhalb des Gehäuses 3 der Strahlvereinigeranordnung 1 bereitgestellt. Dazu sind Lichtleitfasern 5 über eine Zugentlastung aus dem Innern des Gehäuses 3 der Strahlvereinigeranordnung 1 nach außen geführt, welche an ihren Faserenden die als optische Schnittstellen dienenden Faserstecker 4 aufweisen.

Die Laserlichtstrahlen 19 von insgesamt drei Laserlichtquellen 22 (457 nm, 594 nm, 720 nm) werden jeweils über eine Fokussierlinse 8 in die Lichtleitfasern 5 eingekoppelt, wobei die Fokussierlinsen 8 nur aus Gründen der Klarheit separat dargestellt sind und ansonsten in der Praxis fest justiert mit den Fasersteckern 4 verbunden oder sogar in diese integriert sein können. Die spektrale Breite beträgt im vorliegenden Fall für jede Lichtleitfaser 5 bzw. für jeden mit den Lichtleitfasern 5 korrespondierenden Strahlvereiniger 2 innerhalb der Strahlvereinigeranordnung 1 jeweils 25 nm, wobei sich die Bereiche benachbarter Lichtleitfasern 5 teilweise überlappen.

Die Auskopplung des vereinigten Lichtstrahls 9 aus dem Gehäuse 3 der Strahlvereinigeranordnung 1 erfolgt über eine Freistrahloptik durch eine Austrittsöffnung 10 oder ein Austrittsfenster. Im Falle eines nachgeschalteten konfokalen Mikroskops wird der ausgehende Lichtstrahl 9 über eine Linse direkt auf die Anregungslochblende des konfokalen Mikroskops fokussiert.

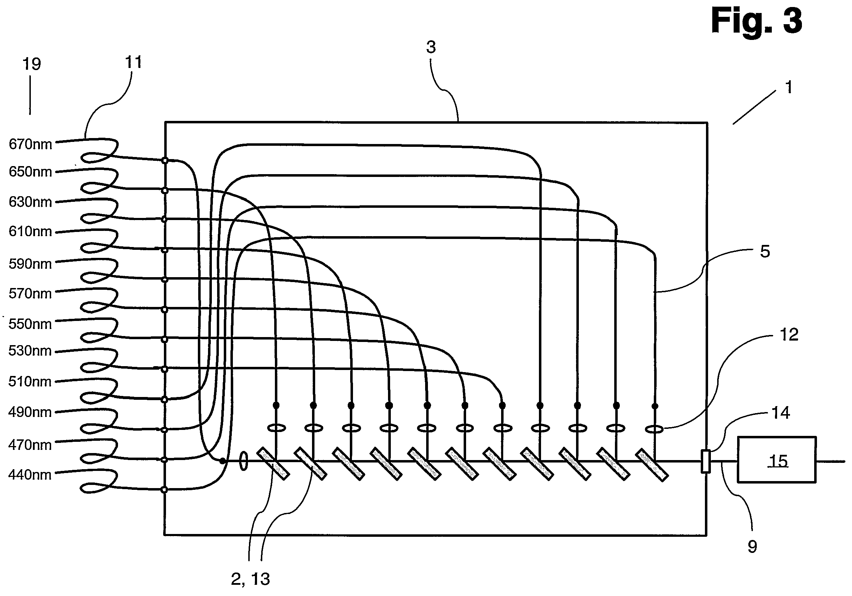

Fig. 3 zeigt den inneren Aufbau einer Strahlvereinigeranordnung 1, bei der die einzelnen Strahlvereiniger 2 hintereinander in einer Reihe innerhalb des Gehäuses 3 angeordnet sind. Von außerhalb des Gehäuses 3 bereitgestellte Laserlichtstrahlen 19 werden über Glasfasern 11 ins Innere des Gehäuses 3 geleitet und auf vor den einzelnen Strahlvereinigern 2 angeordnete Kollimierlinsen 12 geführt. Durch die Kollimierlinsen 12 wird das Laserlicht parallelisiert und auf den jeweiligen Strahlverteiler 2 geleitet.

Die Strahlvereiniger 2 sind als Bandkantenfilter 13 ausgeführt und innerhalb der Reihe entsprechend ihrer jeweiligen Bandkante sortiert. Im vorliegenden Fall zeigen alle Strahlvereiniger 2 für Wellenlängen oberhalb ihrer Bandkante im Wesentlichen transmissive und für Wellenlängen unterhalb ihrer Bandkante im Wesentlichen reflektive Eigenschaften. Im dargestellten Beispiel befindet sich der Bandkantenfilter 13 mit der höchsten Bandkante (ca. 660 nm) in der Reihe ganz links, während sich der Bandkantenfilter 13 mit der niedrigsten Bandkante (ca. 455 nm) in der Reihe ganz rechts befindet. Bei den in der Reihe dazwischen liegenden Bandkantenfiltern 13 liegt die Bandkante von links nach rechts gesehen sukzessive niedriger. Durch diese Anordnung sind die Strahlvereiniger 2 jeweils zum Einkoppeln eines Laserlichtstrahls 19 mit einer Wellenlänge eines definierten Wellenlängenbereichs ausgelegt. So wird beispielsweise in den ersten Bandkantenfilter 13 ganz links ein Laserlichtstrahl 19 mit einer Wellenlänge von 670 nm eingekoppelt, der den Bandkantenfilter 13 - und alle nachfolgenden Bandkantenfilter 13-passiert. Auf die andere Seite des Bandkantenfilters 13 wird ein Laserlichtstrahl mit einer Wellenlänge von 650 nm gelenkt. Da diese Wellenlänge unterhalb der spezifischen Bandkante dieses ersten Bandkantenfilters 13 liegt, wird dieser Laserlichtstrahl 19 im Wesentlichen reflektiert und von allen nachfolgenden Bandkantenfiltern 13 transmittiert, so dass die beiden Laserlichtstrahlen 19 (mit 670 nm und 650 nm) bereits zu einem Lichtstrahl vereint sind. Folgt man den Bandkantenfiltern 13 nach rechts, so wiederholt sich dieser Vorgang für alle eingekoppelten Laserlichtstrahlen 19, so dass hinter dem letzten Bandkantenfilter 13 ein Lichtstrahl 9 vorliegt, der alle eingekoppelten Wellenlängen umfasst.

Im Gehäuse 3 der Strahlvereinigeranordnung 1 ist ein Auskoppelfenster 14 bereitgestellt, das als Freistrahl-Ausgang für den die einzelnen Laserlichtstrahlen 19 vereinenden Lichtstrahl 9 fungiert. Zur spektralselektiven Intensitätseinstellung durchläuft der als Freistahl austretende Lichtstrahl 9 einen AOTF 15 und kann nach Durchlaufen dieses Bauteils beispielsweise einem Fluoreszenzmikroskop zugeleitet werden.

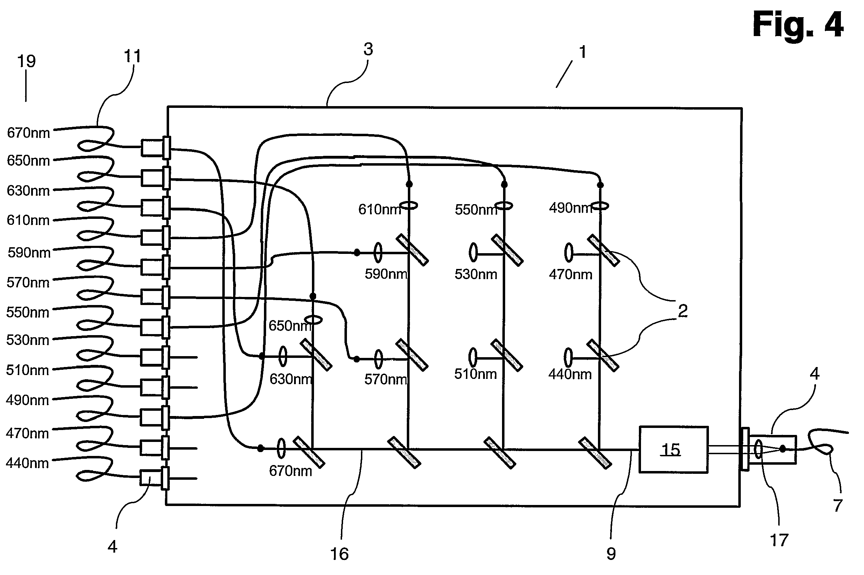

Fig. 4 zeigt schematisch ein weiteres Ausführungsbeispiel einer Strahlvereinigeranordnung 1 mit einer gruppenweisen parallelen Anordnung der einzelnen Strahlvereiniger 2. So werden in den vertikal dargestellten Zweigen einige der Laserlichtstrahlen 19 gruppenweise vorvereinigt, und die auf diese Weise erzeugten vorvereinigten Teillichtstrahlen werden auf dem horizontal dargestellten Zweig - dem Hauptstrahlengang 16 - schließlich zu dem endgültigen, alle gewünschten Wellenlängen umfassenden (Gesamt-)Lichtstrahl 9 vereint.

Nach der Vereinigung aller Laserlichtstrahlen wird die Intensität der einzelnen Wellenlängen durch einen im Gehäuse 3 der Strahlvereinigeranordnung 1 integrierten AOTF 15 eingestellt. Anschließend wird der Lichtstrahl 9 über einen am Gehäuse 3 der Strahlvereinigeranordnung 1 angebrachten Faserstecker 4 in eine breitbandige Lichtleitfaser 7 eingekoppelt, die den Lichtstrahl dann zu einer konkreten Anwendung, bspw. einem Mikroskop, transportiert. Die Einkopplung in die Lichtleitfaser 7 erfolgt mittels einer in den Faserstecker 4 integrierten Fokussieroptik 17. Sowohl Faserstecker 4 als auch Fokussieroptik 17 sind justierbar ausgeführt.

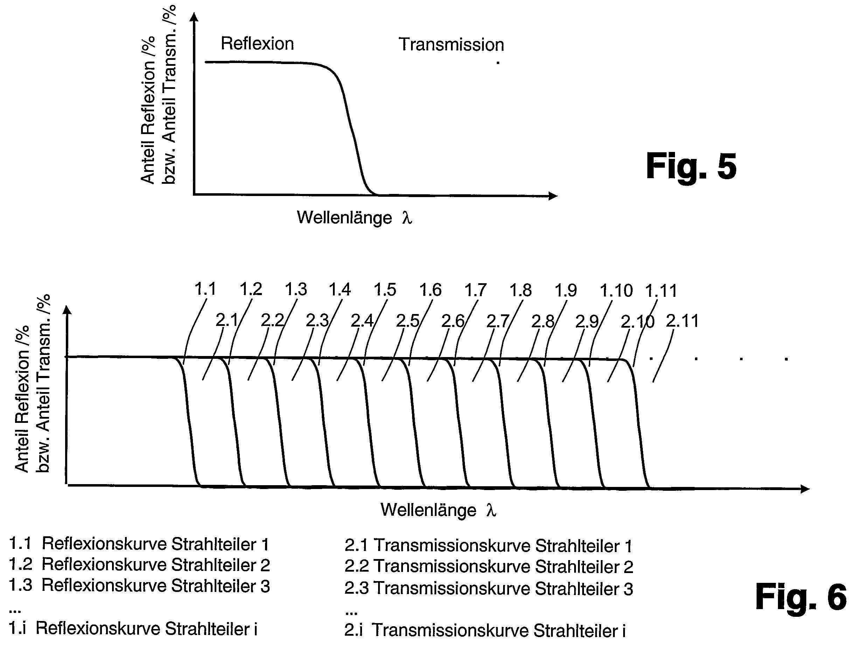

Fig. 5 zeigt das typische Transmissions- und Reflexionsverhalten der verwendeten Bandkantenfilter 13 in Abhängigkeit von der auftreffenden Wellenlänge λ. Wie man deutlich erkennt, besitzen die Bandkatenfilter 13 eine charakteristische Wellenlänge - die sog. Bandkante -, bei der die optische Charakteristik der Bandkantenfilter 13 umschlägt. Die hier beschriebenen Bandkantenfilter 13 weisen für Wellenlängen unterhalb der Bandkante im Wesentlichen reflexive Eigenschaften auf (dargestellt durch die durchgezogene Kurve), während sie Licht mit Wellenlängen oberhalb der Bandkante im Wesentlichen transmittieren (dargestellt durch die gestrichelte Kurve).

Fig. 6 zeigt zur allumfassenden Darstellung ein Diagramm, in dem die Transmissions- und Reflexionscharakteristiken der einzelnen Bandkantenfilter 13 in Abhängigkeit von der Wellenlänge λ dargestellt sind. Deutlich sind die in der Wellenlänge λ gegeneinander verschobenen Bandkanten der einzelnen Bandkantenfilter 13 zu erkennen.

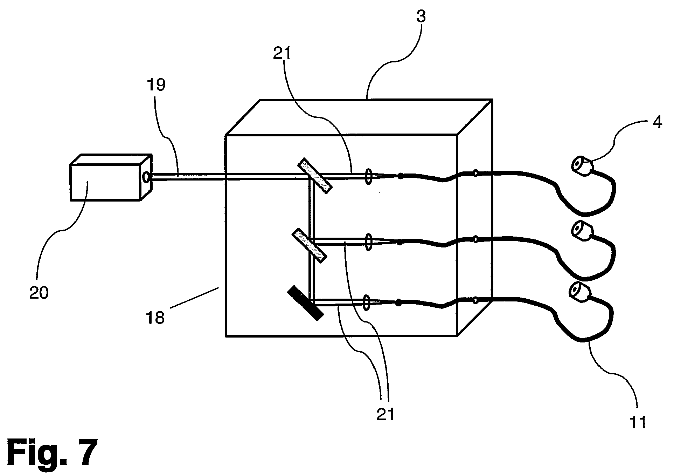

Fig. 7 zeigt schließlich - schematisch - eine Strahlteilungseinheit 18, die dazu dient, den Laserlichtstrahl 19 einer Mehrlinienlaserlichtquelle 20, wie. z.B. eines Argon-Lasers oder eines Argon-Krypton-Lasers, in die einzelnen in dem Laserlichtstrahl 19 enthaltenden Wellenlängen aufzuspalten. Die Strahlteilungseinheit 18 bildet quasi ein inverses System zu der oben beschriebenen Strahlvereinigeranordnung 1. Die erzeugten monochromatischen Laserlichtstrahlen 21 werden mittels Glasfasern 11 aus dem Gehäuse 3 der Strahlteilungseinheit 18 herausgeführt. Über an den Enden der Glasfasern 11 ausgebildete Faserstecker 4 können die Laserlichtstrahlen 21 wie oben beschrieben zusammen mit weiteren Laserlichtstrahlen in eine nicht dargestellte Strahlvereinigeranordnung 1 eingekoppelt werden und dort wie oben beschrieben miteinander vereinigt werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Mikroskop mit einer Vorrichtung zur Vereinigung von Laserlichtstrahlen unterschiedlicher Wellenlängen zu einem mehrere Wellenlängen umfassenden Beleuchtungslichtstrahl, umfassend
eine einzelne Strahlvereiniger (2) umfassende Strahlvereinigeranordnung (1) zur Vereinigung von durch jeweilige Laserlichtquellen erzeugten Laserlichtstrahlen (19) unterschiedlicher Wellenlängen, wobei die Strahlvereiniger (2) jeweils eine individuelle charakteristische Wellenlänge derart besitzen, dass sie Laserlichtstrahlen (19) mit Wellenlängen, die kürzer sind als die charakteristische Wellenlänge, im Wesentlichen transmittieren und Laserlichtstrahlen (19) mit längeren Wellenlängen im Wesentlichen reflektieren oder umgekehrt,
**dadurch gekennzeichnet, dass** die Strahlvereiniger (2) jeweils zum Einkoppeln eines Laserlichtstrahls (19) mit einer Wellenlänge eines definierten Wellenlängenbereichs ausgelegt sind, indem
die Strahlvereiniger (2) derart gruppenweise parallel zueinander im Sinne einer baumartigen Struktur angeordnet sind, dass die charakteristischen Wellenlängen von benachbarten Strahlvereinigern (2) in den Parallelzweigen jeweils weniger als 40 nm auseinander liegen,
wobei die Strahlvereiniger (2) derart bereitgestellt sind, dass durch die Gesamtheit der gleichzeitig einkoppelbaren Laserlichtstrahlen (19) im Wesentlichen das sichtbare Wellenlängenspektrum von 430 nm bis 700 nm mit einer Separation von jeweils benachbarten Wellenlängen von maximal 40 nm abdeckbar ist.

2. Mikroskop nach Anspruch 1, **dadurch gekennzeichnet, dass** die Strahlvereiniger (2) als Bandkantenfilter (13), als dichroitische Filter oder als Etalons ausgeführt sind.

3. Mikroskop nach Anspruch 1 oder 2, **dadurch gekennzeichnet, dass** die charakteristischen Wellenlängen von benachbarten Strahlvereinigern (2) in den Parallelzweigen jeweils weniger als 20 nm auseinander liegen.

4. Mikroskop nach einem der Ansprüche 1 bis 3, **dadurch gekennzeichnet, dass** die charakteristischen Wellenlängen von benachbarten Strahlvereinigern (2) in den Parallelzweigen jeweils äquidistant zueinander auseinander liegen.

5. Mikroskop nach einem der Ansprüche 1 bis 4, **dadurch gekennzeichnet, dass** vor den einzelne Strahlvereinigern (2) Kollimierlinsen (12) zur Parallelisierung der Laserlichtstrahlen (19) angeordnet sind.

6. Mikroskop nach Anspruch 5, **dadurch gekennzeichnet, dass** die Laserlichtstrahlen (19) über Lichtleitfasern (5) auf die Kollimierlinsen (12) lenkbar sind und/oder
die Strahlvereiniger (2) und die Kollimierlinsen (12) unmittelbar oder mittelbar fest mit dem Gehäuse (3) verbunden sind.

7. Mikroskop nach einem der Ansprüche 1 bis 6, **dadurch gekennzeichnet, dass** die Strahlvereinigeranordnung (1) in einem Gehäuse (3) eingeschlossen ist und dass den Strahlvereinigern (2) fest innerhalb des Gehäuses (3) angeordnete, vorzugsweise miniaturisierte, Laserlichtquellen zugeordnet sind, wobei
die Laserlichtquellen vorzugsweise von außerhalb des Gehäuses (3) unabhängig voneinander aktivierbar und deaktivierbar sind.

8. Mikroskop nach einem der Ansprüche 1 bis 7, **dadurch gekennzeichnet, dass** die Einkopplung der Laserlichtstrahlen (19) in den Strahlvereiniger (2) über Freistrahloptiken erfolgt.

9. Mikroskop nach einem der Ansprüche 6 bis 8, **dadurch gekennzeichnet, dass** es sich bei den Lichtleitfasern (5) um mikrostrukturierte Glasfasern (11) aus photonischem Bandlücken-Material handelt, wobei
der optische Querschnitt der Glasfasern (11) am Faserende vorzugsweise größer ist als 10 µm und/oder wobei
der optische Querschnitt der Glasfasern (11) am Faserende vorzugsweise größer ist als im Inneren der Faser.

10. Mikroskop nach einem der Ansprüche 1 bis 9, **dadurch gekennzeichnet, dass** die Strahlvereinigeranordnung (1) zum Auskoppeln des Lichtstrahls (9) einen Ausgang (6) in Form einer Lichtleitfaser (7) mit Faserstecker (4) oder einer Austrittsöffnung (10) für Freistrahloptik aufweist, wobei
die Lichtleitfaser (7) zum Auskoppeln des Lichtstrahls (9) vorzugsweise als polarisationserhaltende, breitbandige Single-Mode-Faser ausgeführt ist.

11. Mikroskop nach Anspruch 10, **dadurch gekennzeichnet, dass** am Ausgang (6) der Strahlvereinigeranordnung (1) ein Element zur spektralsensitiven Intensitätseinstellung bereitgestellt ist, wobei
das Element zur spektralsensitiven Intensitätseinstellung vorzugsweise innerhalb des Gehäuses (3) der Strahlvereinigeranordnung (1) angeordnet ist.

12. Mikroskop nach Anspruch 11, **dadurch gekennzeichnet, dass** das Element zur spektralsensitiven Intensitätseinstellung ein akustooptischer Filter (AOTF) (15), ein akustooptischer Modulator (AOM), ein elektrooptischer Modulator (EOM), ein einstellbarer Flüssigkristallfilter (LCTF), ein Grating Valve Device (GVD) oder ein MEMS (Micro-Electro-Mechanical-System)-basierter Filter ist.

13. Mikroskop nach einem der Ansprüche 1 bis 12, **gekennzeichnet durch** eine Mehrlinienlaserlichtquelle (20) zur Bereitstellung eines unterschiedliche Wellenlängen umfassenden Laserlichtstrahls (19).

14. Mikroskop nach Anspruch 13, **gekennzeichnet durch** eine zur Strahlvereinigeranordnung (1) inverse Strahlteilungseinheit (18) zur Separierung der unterschiedlicher Wellenlängen des Laserlichtstrahls (19), wobei
die Strahlteilungseinheit (18) der Strahlvereinigeranordnung (1) vorzugsweise vorgeschaltet ist, an dieser befestigt ist oder in diese integriert ist.

15. Mikroskop nach Anspruch 14, **dadurch gekennzeichnet, dass** die Strahlvereinigeranordnung (1) einen Mehrfachkerbfilter zur Vereinigung der Laserlichtstrahlen (21) der Mehrlinienlaserlichtquelle (20) mit dem Lichtstrahl aufweist.

## Claims

1. Microscope having an apparatus for combining laser light beams having different wavelengths into one illumination light beam comprising a plurality of wavelengths, comprising
a beam combiner arrangement (1) comprising individual single beam combiners (2) for combining laser light beams (19) having different wavelengths generated by respective laser light sources, wherein the beam combiners (2) each have an individual characteristic wavelength such that they substantially transmit laser light beams (19) having wavelengths that are shorter than the characteristic wavelength and substantially reflect laser light beams (19) having longer wavelengths, or vice versa,
**characterized in that** the beam combiners (2) are each designed for coupling in a laser light beam (19) having a wavelength of a defined wavelength range, by
arranging the beam combiners (2) in groups parallel with respect to one another in the manner of a tree-type structure such that the characteristic wavelengths of neighbouring beam combiners (2) within the parallel branches are spaced apart in each case by less than 40 nm,
wherein the beam combiners (2) are provided such that the visible wavelength spectrum from 430 nm to 700 nm is substantially coverable, with a separation of respectively neighbouring wavelengths of at most 40 nm, by the entirety of the laser light beams (19) which can be coupled in at the same time.

2. Microscope according to Claim 1, **characterized in that** the beam combiners (2) are designed as band edge filters (13), as dichroic filters or as etalons.

3. Microscope according to Claim 1 or 2, **characterized in that** the characteristic wavelengths of neighbouring beam combiners (2) within the parallel branches are spaced apart in each case by less than 20 nm.

4. Microscope according to one of Claims 1 to 3, **characterized in that** the characteristic wavelengths of neighbouring beam combiners (2) within the parallel branches are in each case equidistantly spaced apart.

5. Microscope according to one of Claims 1 to 4, **characterized in that** collimating lenses (12) are arranged upstream of the individual beam combiners (2) for parallelization of the laser light beams (19).

6. Microscope according to Claim 5, **characterized in that** the laser light beams (19) are directable via optical fibres (5) onto the collimating lenses (12) and/or
the beam combiners (2) and the collimating lenses (12) are directly or indirectly connected fixedly to the housing (3).

7. Microscope according to one of Claims 1 to 6, **characterized in that** the beam combiner arrangement (1) is enclosed in a housing (3) and **in that** preferably miniaturized laser light sources, which are arranged fixedly within the housing (3), are assigned to the beam combiners (2), wherein
the laser light sources are activatable and deactivatable independently from one another preferably from outside the housing (3).

8. Microscope according to one of Claims 1 to 7, **characterized in that** the laser light beams (19) are coupled into the beam combiners (2) via free beam optics.

9. Microscope according to one of Claims 6 to 8, **characterized in that** the optical fibres (5) are microstructured glass fibres (11) of photonic band gap material, wherein
the optical cross section of the glass fibres (11) at the fibre end is preferably greater than 10 µm and/or wherein
the optical cross section of the glass fibres (11) at the fibre end is preferably greater than inside the fibre.

10. Microscope according to one of Claims 1 to 9, **characterized in that** the beam combiner arrangement (1) has, for coupling out the light beam (9), an exit (6) in the form of an optical fibre (7) with a fibre plug (4) or an exit opening (10) for free beam optics, wherein
the optical fibre (7) is designed for coupling out the light beam (9) preferably as polarization-maintaining, broadband single-mode fibre.

11. Microscope according to Claim 10, **characterized in that** an element for spectral-sensitive intensity adjustment is provided at the exit (6) of the beam combiner arrangement (1), wherein
the element for spectral-sensitive intensity adjustment is arranged preferably within the housing (3) of the beam combiner arrangement (1).

12. Microscope according to Claim 11, **characterized in that** the element for spectral-sensitive intensity adjustment is a filter based on an acousto-optic filter (AOTF) (15), an acousto-optic modulator (AOM), an electro-optic modulator (EOM), a liquid-crystal tunable filter (LCTF), a grating valve device (GVD) or a MEMS (micro-electro-mechanical system).

13. Microscope according to one of Claims 1 to 12, **characterized by** a multi-line laser light source (20) for providing a laser light beam (19) comprising different wavelengths.

14. Microscope according to Claim 13, **characterized by** a beam splitting unit (18), which is inverse to the beam combiner arrangement (1), for separating the different wavelengths of the laser light beam (19), wherein
the beam splitting unit (18) is preferably connected upstream of, attached to, or integrated in the beam combiner arrangement (1).

15. Microscope according to Claim 14, **characterized in that** the beam combiner arrangement (1) has a multinotch filter for combining the laser light beams (21) of the multi-line laser light source (20) with the light beam.

## Revendications

1. Microscope doté d'un dispositif qui rassemble des faisceaux de lumière laser de différentes longueurs d'onde en un faisceau de lumière d'éclairage comprenant plusieurs longueurs d'onde, le microscope comprenant :
un ensemble (1) de rassemblement de faisceaux qui comprend différents rassembleurs de faisceaux (2) qui rassemblent des faisceaux (19) de lumière laser formés par des sources respectives de lumière laser de différentes longueurs d'onde, les rassembleurs (2) de faisceaux présentant chacun une longueur d'onde caractéristique distincte de telle sorte qu'ils transmettent essentiellement des faisceaux (19) de lumière laser dont les longueurs d'onde sont plus courtes que la longueur d'onde caractéristique et qu'ils réfléchissent essentiellement les faisceaux (19) de lumière laser de longueurs d'onde plus longues, ou inversement,
**caractérisé en ce que**
les rassembleurs de faisceaux (2) sont tous conçus pour injecter un faisceau (19) de lumière laser d'une longueur d'onde située dans une plage définie de longueurs d'onde, par le fait que
les rassembleurs de faisceaux (2) sont disposés par groupes parallèlement les uns aux autres en une structure arborescente de telle sorte que les longueurs d'onde caractéristiques de rassembleurs de faisceaux (2) voisins des branches parallèles soient situées à moins de 40 nm l'une de l'autre,
les rassembleurs de faisceaux (2) étant prévus de telle sorte que le spectre des longueurs d'onde de 430 nm à 700 nm puisse être essentiellement recouvert par la totalité des faisceaux (19) de lumière laser qui peuvent être injectés simultanément, avec une séparation d'au plus 40 nm entre des longueurs d'onde voisines.

2. Microscope selon la revendication 1, **caractérisé en ce que** les rassembleurs de faisceaux (2) sont réalisés sous la forme de filtres (13) à bande de bord, comme filtres dichroïques ou comme étalons.

3. Microscope selon les revendications 1 ou 2, **caractérisé en ce que** les longueurs d'onde caractéristiques de rassembleurs de faisceaux (2) voisins dans les branches parallèles sont situées à moins de 20 nm l'une de l'autre.

4. Microscope selon l'une des revendications 1 à 3, **caractérisé en ce que** les longueurs d'onde caractéristiques de rassembleurs de faisceaux (2) voisins dans les branches parallèles sont situées en des positions équidistantes les unes des autres.

5. Microscope selon l'une des revendications 1 à 4, **caractérisé en ce qu'**en avant des différents rassembleurs de faisceaux (2), des lentilles de collimation (12) sont disposées pour paralléliser les faisceaux (19) de lumière laser.

6. Microscope selon la revendication 5, **caractérisé en ce que** les faisceaux (19) de lumière laser peuvent être envoyés sur les lentilles de collimation (12) par l'intermédiaire de fibres (5) conductrices de lumière et/ou **en ce que** les rassembleurs de faisceaux (2) et les lentilles (12) de collimation sont reliés directement ou indirectement au boîtier (3).

7. Microscope selon l'une des revendications 1 à 6, **caractérisé en ce que** l'ensemble (1) de rassemblement de faisceaux est enfermé dans un boîtier (3) et **en ce que** des sources de lumière laser de préférence miniaturisées, disposées fixement à l'intérieur du boîtier (3), sont associées aux rassembleurs de faisceaux (2), les sources de lumière laser pouvant être activées et désactivées indépendamment les unes des autres de préférence de l'extérieur du boîtier (3).

8. Microscope selon l'une des revendications 1 à 7, **caractérisé en ce que** l'injection des faisceaux (19) de lumière laser dans les rassembleurs de faisceaux (2) s'effectue par l'intermédiaire d'optiques à rayonnement libre.

9. Microscope selon l'une des revendications 6 à 8, **caractérisé en ce que** les fibres (5) conductrices de lumière sont des fibres de verre microstructurées (11) en matériau à interstices entre bandes photoniques, la section transversale optique des fibres de verre (11) à l'extrémité des fibres étant de préférence supérieure à 10 µm et/ou la section transversale optique des fibres de verre (11) à l'extrémité des fibres étant de préférence plus grande qu'à l'intérieur des fibres.

10. Microscope selon l'une des revendications 1 à 9, **caractérisé en ce que** l'ensemble (1) de rassemblement de faisceaux présente pour l'émission du faisceau de lumière (9) une sortie (6) qui présente la forme d'une fibre (7) conductrice de lumière dotée d'une fiche (4) de fibres ou d'une ouverture de sortie (10) pour optiques à rayonnement libre, la fibre (7) conductrice de lumière utilisée pour émettre le faisceau de lumière (9) est de préférence configurée comme fibre en mode simple à large bande maintenant la polarisation.

11. Microscope selon la revendication 10, **caractérisé en ce qu'**à la sortie (6) de l'ensemble (1) de rassemblement de faisceaux est prévu un élément de réglage de l'intensité en fonction du spectre, l'élément de réglage de l'intensité sensible au spectre étant disposé de préférence à l'intérieur du boîtier (3) de l'ensemble (1) de rassemblement de faisceaux.

12. Microscope selon la revendication 11, **caractérisé en ce que** l'élément de réglage de l'intensité sensible au spectre est un filtre acoustico-optique (AOTF) (15), un modulateur acoustico-optique (AOM), un modulateur électro-optique (EOM), un filtre réglable à cristaux liquides (LCTF), un dispositif de soupape à grille (GVD) ou un filtre à base de MEMS (système microélectromécanique).

13. Microscope selon l'une des revendications 1 à 12, **caractérisé par** une source (20) de lumière laser multiligne qui délivre un faisceau (19) de lumière laser qui comprend différentes longueurs d'onde.

14. Microscope selon la revendication 13, **caractérisé par** une unité (18) de division de faisceaux inverse de l'ensemble (1) de rassemblement de faisceaux, qui sépare les différentes longueurs d'onde du faisceau (19) de lumière laser, l'unité (18) de division de faisceaux étant de préférence raccordée en amont de l'ensemble (1) de rassemblement de faisceaux, fixé à cette dernière ou intégré dans cette dernière.

15. Microscope selon la revendication 14, **caractérisé en ce que** l'ensemble (1) de rassemblement de faisceaux présente un filtre à entailles multiples qui rassemble les faisceaux (21) de lumière laser de la source (20) de lumière laser multiligne avec le faisceau de lumière.
